# EUROPÄISCHE PATENTSCHRIFT

(11) **EP 3 224 031 B1**
(45) Veröffentlichungstag und Bekanntmachung des Hinweises auf die Patenterteilung: **16.12.2020**
(21) Anmeldenummer: 15790885.6
(22) Anmeldetag: 30.10.2015
(51) Int. Cl.: B29C 70/48

(54) **VERFAHREN ZUR HERSTELLUNG EINER STRUKTURBAUTEILGRUPPE SOWIE STRUKTURBAUTEILGRUPPE**
METHOD FOR PRODUCING A STRUCTURAL SUBASSEMBLY AND STRUCTURAL SUBASSEMBLY
PROCÉDÉ DE FABRICATION D'UN GROUPE D'ÉLÉMENTS STRUCTURAUX ET GROUPE D'ÉLÉMENTS STRUCTURAUX

(30) Priorität: 25.11.2014 DE 102014224040
(43) Veröffentlichungstag der Anmeldung: 04.10.2017
(73) Patentinhaber: Bayerische Motoren Werke Aktiengesellschaft, 80809 München (DE)
(72) Erfinder: FLEMMING, Torsten, 85244 Roehrmoos (DE); PREUSS, Tobias, 80469 München (DE); STAUDT, Bernhard, 80797 München (DE); SPIRKL, Florian, 84155 Bodenkirchen (DE)
(86) Internationale Anmeldenummer: PCT/EP2015/075244
(87) Internationale Veröffentlichungsnummer: WO 2016/083071

(56) Entgegenhaltungen:
- EP-A2- 0 243 751
- DE-A1-102011 089 051
- US-A- 5 857 690
- US-A1- 2006 165 955

## Beschreibung

Die Erfindung betrifft ein Verfahren zur Herstellung einer Strukturbauteilgruppe, insbesondere für ein Kraftfahrzeug, mit wenigstens einem ersten Profilbauteil aus faserverstärktem Kunststoff und wenigstens einem Verbindungsbauteil zur Herstellung einer Knotenverbindung des ersten mit einem weiteren Profilbauteil. Weiterhin betrifft die Erfindung eine Strukturbauteilgruppe.

Aus der gattungsbildenden EP 0 243 751 A2 sind eine Kraftfahrzeug-Rahmenkonstruktion aus faserverstärktem Kunststoff und ein Verfahren zu deren Herstellung bekannt. Die Rahmenkonstruktion weist ein rohrartiges Verbindungsteil auf, das an ein seitliches Rahmenteil angeformt wird und der Verbindung mit einem Dachträger dient.

In der US 2006/0165955 A1 ist ein Bauteil mit langfaserverstärkten Versteifungsstreben beschrieben, die einteilig am Bauteil angeformt sind oder das Bauteil bilden und in denen Endlosfasern integriert sind.

Die DE 10 2011 089 051 A1 offenbart eine Kraftfahrzeugkarosserie mit einem Karosseriemittelbau, der einen hinteren Boden und eine hintere Wand aufweist, die einstückig aus faserverstärktem Kunststoff ausgebildet sind und aufeinandergelegte Fasermatten aufweist.

Zur Herstellung leichter und gleichzeitig stabiler und tragfähiger Fahrzeugstrukturen (beispielsweise Karosseriebauteile) kommen aktuell Profilbauteile aus faserverstärkten Kunststoffen zum Einsatz, die zum Beispiel in Injektions- oder Infusionsverfahren hergestellt werden. Die Profile werden nach ihrer Fertigung miteinander oder mit weiteren angrenzenden Strukturbauteilen verbunden. Die Verbindung wird meist durch eine Knotenverbindung aus mehreren miteinander verklebten oder verschraubten Einzelteilen erzielt. Beispielsweise können die zu verbindenden Profile zwischen mindestens zwei Schalen eingeschlossen werden. Die Schalen bestehen dabei aus metallischen Werkstoffen wie etwa Aluminium, Stahl, etc., oder aus polymeren Werkstoffen, beispielsweise Kunststoff, und werden je nach Material in verschiedenen etablierten Herstellungsverfahren gefertigt. Anschließend werden die Profilbauteile und die Verbindungsbauteile zusammengefügt.

Gegenüber diesem Stand der Technik schafft die Erfindung ein Verfahren zur Herstellung einer Strukturbauteilgruppe beziehungsweise eine Strukturbauteilgruppe, die sich durch einen geringeren Montageaufwand sowie eine vereinfachte Fertigung auszeichnet.

Hierzu weist ein Verfahren der eingangs genannten Art die folgenden Schritte auf:
a) Bereitstellen einer Form mit wenigstens einer Formhälfte, die eine Kavität aufweist, die im Wesentlichen dem herzustellenden ersten Profilbauteil mit wenigstens einem einstückig angeformten Verbindungsbauteil entspricht, wobei das Verbindungsbauteil ein Schalenteil für die Knotenverbindung aufweist, in das ein oder mehrere weitere Profilbauteile eingelegt werden können und die Verbindung mithilfe weiterer Schalen vervollständigt werden kann;
b) Einbringen eines ein- oder mehrstückigen textilen Verstärkungsmaterials, im Form eines textilen Halbzeugs, in die Form, wobei das textile Verstärkungsmaterial ein erstes textiles Halbzeug für das Profilbauteil sowie mindestens ein zweites textiles Halbzeug für das Verbindungsbauteil aufweist, die sich in der Form berühren und überlappen, wobei die Halbzeuge Faserpreforms sind;
c) Einbringen eines fließfähigen Kunststoffmaterials in einem Infusionsverfahren unter Vakuum in die Form, um das textile Verstärkungsmaterial zu durchtränken; und
d) Aushärten und/oder Abkühlen des Kunststoffmaterials.

Erfindungsgemäß wird also bei der Fertigung des ersten Profilbauteils zumindest ein Verbindungsbauteil der Knotenverbindung einstückig mit dem Profilbauteil in einem einzigen Fertigungsprozess hergestellt. Dazu weist die Form eine sogenannte endkonturnahe Kavität auf, die weitestgehend dem zu fertigenden Profilbauteil inklusive Verbindungsbauteil entspricht und somit keine oder nur eine geringe Nachbearbeitung der erhaltenen Strukturbauteilgruppe erforderlich macht. Mit dem erfindungsgemäßen Verfahren lässt sich gegenüber bislang üblichen Fertigungsverfahren die Zahl der Einzelprozesse zur Herstellung der Strukturbauteilgruppe reduzieren. Auch ist der Montageaufwand bei einer anschließenden Verbindung mehrerer Profilbauteile geringer, da zumindest für ein Verbindungsbauteil auf eine Positionierung und Befestigung verzichtet werden kann.

Dies ist insbesondere bei Anordnungen mit eingeschränkter Zugänglichkeit von Vorteil. Weiterhin kann der Einsatz von Klebstoff und eine damit einhergehende unerwünschte Reduzierung der mechanischen Eigenschaften des Zusammenbaus vermieden werden, so etwa eine geringe Gesamtsteifigkeit, die aus dem Einsatz von Klebstoff mit niedrigem E-Modul resultieren kann. Zudem finden also zumindest für das Profilbauteil gängige Halbzeuge Verwendung. Durch die Anordnung der Halbzeuge zueinander wird beim anschließenden Einbringen des Kunststoffmaterials eine besonders stabile Verbindung von Profilbauteil und Verbindungsbauteil erreicht.

Bei den textilen Halbzeugen handelt es sich vorzugsweise um sogenannte Faserpreforms, die als Geflecht, Gewebe, Gelege, Gestick oder andere Fasergewirke aus Glasfasern, Carbonfasern oder Aramidfasern ausgebildet sein können.

Bei dem Einbringen des fließfähigen Kunststoffmaterials in einem Infusionsverfahren unter Vakuum werden die textilen Halbzeuge in die Formhälften eingelegt, wobei eine fluid- und gasdichte Folie als Formgegenstück dient. Die Form wird evakuiert, und das Kunststoffmaterial wird mittels Unterdruck durch die Kavität transportiert.

Die Form kann zwei Formhälften aufweisen, die im geschlossenen Zustand die Kavität bilden.

Insbesondere werden die textilen Halbzeuge durch das Kunststoffmaterial miteinander verbunden. Das Verbindungsbauteil wird also beim Einbringen des Kunststoffmaterials und anschließendem Aushärten und/oder Abkühlen direkt an das Profilbauteil angeharzt.

Um eine gute Infiltrierbarkeit des textilen Verstärkungsmaterials zu erreichen, weist die Kavität vorteilhaft ein definiertes Angusssystem auf.

Die oben genannte Aufgabe wird ebenfalls gelöst durch eine Strukturbauteilgruppe, insbesondere für ein Kraftfahrzeug, mit wenigstens einem ersten Profilbauteil aus faserverstärktem Kunststoff und wenigstens einem Verbindungsbauteil, das einstückig mit dem ersten Profilbauteil aus faserverstärktem Kunststoff gefertigt ist. Das Verbindungsbauteil dient zur Herstellung einer Knotenverbindung zwischen dem wenigstens ersten Profilbauteil und wenigstens einem weiteren Profilbauteil und weist ein Schalenteil für die Knotenverbindung auf, in das ein oder mehrere weitere Profilbauteile eingelegt werden können und die Verbindung mithilfe weiterer Schalen vervollständigt werden kann. Dadurch lässt sich die Anzahl der Einzelprozesse zur Fertigung der Strukturbaugruppe reduzieren. Auch der Montageaufwand ist gegenüber dem Stand der Technik geringer, da zumindest ein Verbindungsbauteil bereits mit dem Profilbauteil verbunden ist. Das Verbindungsbauteil wird bei der Herstellung der Strukturbauteilgruppe in einem Infusionsverfahren unter Vakuum direkt mit dem Profilbauteil verbunden. Ein erstes textiles Halbzeug des Profilbauteils sowie ein zweites textiles Halbzeug des Verbindungsbauteils berühren und überlappen sich hierbei. So wird eine besonders stabile Verbindung erzielt.

Des Weiteren gelten sämtliche mit Bezug auf das erfindungsgemäße Verfahren genannten Weiterbildungen und Vorteile natürlich auch für die erfindungsgemäße Strukturbauteilgruppe.

Weitere Merkmale und Vorteile der Erfindung ergeben sich aus der nachfolgenden Beschreibung einer bevorzugten Ausführungsform anhand der beigefügten Zeichnungen. In diesen zeigen:
- Figur 1 eine schematische Draufsicht auf eine Werkzeugformhälfte, wie sie beim erfindungsgemäßen Verfahren zum Einsatz kommt;
- Figur 2 eine schematische Draufsicht auf die Werkzeugformhälfte aus Figur 1 nach Einbringen eines textilen Verstärkungsmaterials;
- Figur 3 eine schematische Draufsicht auf die Werkzeugformhälfte aus Figur 2 nach Einbringen eines fließfähigen Kunststoffmaterials; und
- Figur 4 eine perspektivische Ansicht einer erfindungsgemäßen Strukturbauteilgruppe.

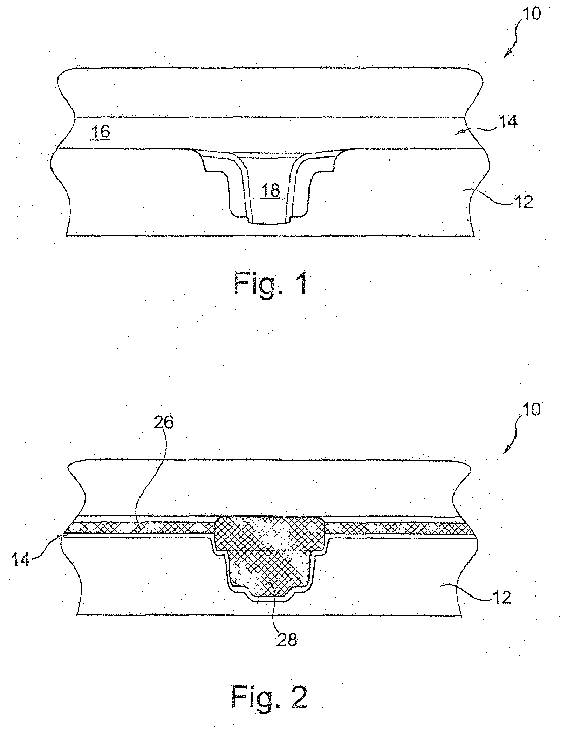

Figur 1 zeigt schematisch eine Form 10 zur Herstellung einer Strukturbauteilgruppe aus faserverstärktem Kunststoff, wobei die Form 10 eine untere Formhälfte 12 und eine in den Figuren der Übersichtlichkeit halber nicht gezeigte obere Formhälfte aufweist. Die Form 10 weist eine Kavität 14 auf, die durch korrespondierende Ausnehmungen in der oberen Formhälfte sowie der unteren Formhälfte 12 gebildet wird und einen länglichen Bereich 16 sowie einen daran anschließenden halbschalenartigen Bereich 18 umfasst.

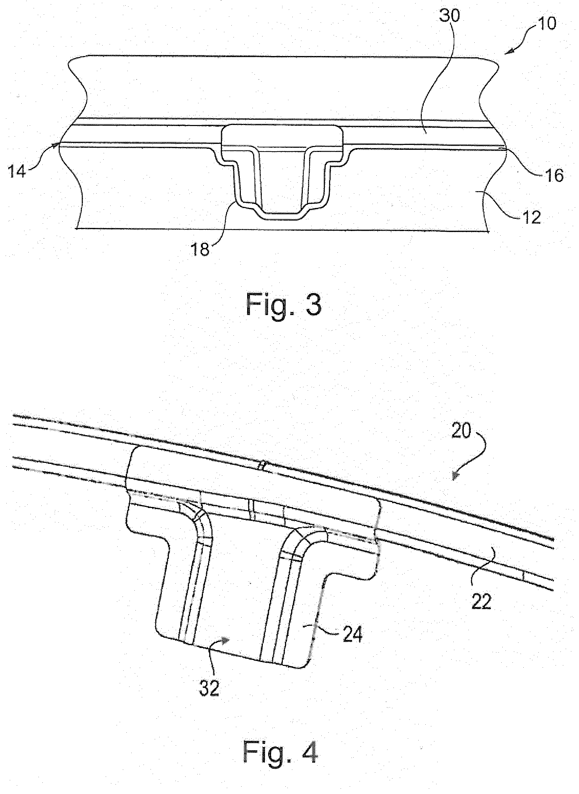

Damit entspricht die Kavität 14 der Endkontur der herzustellenden Strukturbauteilgruppe 20, die in Figur 4 gezeigt ist und ein erstes Profilbauteil 22 (entsprechend dem länglichen Bereich 16 der Kavität 14) sowie mindestens ein einstückig daran angeformtes Verbindungsbauteil 24, das dem halbschalenartigen Bereich 18 entspricht, umfasst.

Zur Herstellung der Strukturbauteilgruppe 20 wird in die Kavität 14 ein textiles Verstärkungsmaterial in Form eines ersten textilen Halbzeugs 26 für das Profilbauteil 22 sowie eines zweiten textilen Halbzeugs 28 für das Verbindungsbauteil 24 eingelegt, wobei sich die textilen Halbzeuge 26 und 28 in der Form 10 beziehungsweise der Kavität 14 berühren und überlappen, indem das textile Halbzeug 28 auf dem textilen Halbzeug 26 aufliegt (siehe Figur 2). Bei den textilen Halbzeugen 26, 28 handelt es sich um sogenannte Faserpreforms, beispielsweise aus Textilgeflecht.

Gemäß einem nicht erfindungsgemäßen Verfahren wird die Form 10 geschlossen, und über ein definiertes Angusssystem wird ein fließfähiges Kunststoffmaterial 30 unter Druck in die abgedichtete und gegebenenfalls zuvor evakuierte Form 10 injiziert, wobei das Kunststoffmaterial 30 die trockenen Fasern der textilen Halbzeuge 26, 28 durchtränkt (Figur 3). Die beiden Halbzeuge 26, 28 werden durch das Kunststoffmaterial 30 miteinander verbunden. Es wird also das Verbindungsbauteil 24 direkt mit dem Profilbauteil 22 verbunden.

Nach dem Aushärten und/oder Abkühlen des Kunststoffmaterials 30 und gegebenenfalls einer geringfügigen Nachbearbeitung kann die in Figur 4 gezeigte fertige Strukturbauteilgruppe 20, bestehend aus dem Profilbauteil 22 mit "angeharztem" (im Falle eines duroplastischen Kunststoffes) Verbindungsbauteil 24, aus der Form 10 entnommen werden.

Das Verbindungsbauteil 24 weist eine Vertiefung 32 zur Aufnahme eines weiteren, in den Figuren nicht gezeigten Profilbauteils auf und bildet somit eine Halbschale für eine Knotenverbindung des Profilbauteils 22 mit dem weiteren Profilbauteil.

Gemäß der Erfindung wird das beschriebene Injektionsverfahren durch ein Infusionsverfahren unter Vakuum ersetzt.

Wesentliche Vorteile des erfindungsgemäßen Verfahrens sind der reduzierte Montageaufwand, die Reduktion der Einzelprozessschritte sowie die Erhöhung der mechanischen Eigenschaften der Strukturbauteilgruppe.

## Patentansprüche

1. Verfahren zur Herstellung einer Strukturbauteilgruppe (20), insbesondere für ein Kraftfahrzeug, mit wenigstens einem ersten Profilbauteil (22) aus faserverstärktem Kunststoff und wenigstens einem Verbindungsbauteil (24) zur Herstellung einer Knotenverbindung des ersten mit einem weiteren Profilbauteil, **gekennzeichnet durch** folgende Schritte:
a) Bereitstellen einer Form (10) mit wenigstens einer Formhälfte (12), die eine Kavität (14) aufweist, die im Wesentlichen dem herzustellenden ersten Profilbauteil (22) mit wenigstens einem einstückig angeformten Verbindungsbauteil (24) entspricht, wobei das Verbindungsbauteil (24) ein Schalenteil für die Knotenverbindung aufweist, in das ein oder mehrere weitere Profilbauteile eingelegt werden können und die Verbindung mithilfe weiterer Schalen vervollständigt werden kann;
b) Einbringen eines ein- oder mehrstückigen textilen Verstärkungsmaterials eines textilen Halbzeugs, in die Form (10), wobei das textile Verstärkungsmaterial ein erstes textiles Halbzeug (26) für das Profilbauteil (22) sowie mindestens ein zweites textiles Halbzeug (28) für das Verbindungsbauteil (24) aufweist, die sich in der Form (10) berühren und überlappen, wobei die Halbzeuge Faserpreforms sind;
c) Einbringen eines fließfähigen Kunststoffmaterials (30) in einem Infusionsverfahren unter Vakuum in die Form (10), um das textile Verstärkungsmaterial zu durchtränken; und
d) Aushärten und/oder Abkühlen des Kunststoffmaterials (30).

2. Verfahren nach Anspruch 1, **dadurch gekennzeichnet, dass** die textilen Halbzeuge (26, 28) durch das Kunststoffmaterial (30) miteinander verbunden werden.

3. Verfahren nach Anspruch 1 oder 2, **dadurch gekennzeichnet, dass** die Kavität (14) ein definiertes Angusssystem aufweist.

4. Verfahren nach einem der vorhergehenden Ansprüche, **dadurch gekennzeichnet, dass** die Form (10) zwei Formhälften aufweist, die im geschlossenen Zustand die Kavität (14) bilden.

5. Strukturbauteilgruppe, insbesondere für ein Kraftfahrzeug, mit wenigstens einem ersten Profilbauteil (22) aus faserverstärktem Kunststoff und wenigstens einem Verbindungsbauteil (24), das einstückig mit dem ersten Profilbauteil (22) aus faserverstärktem Kunststoff gefertigt ist, wobei das Verbindungsbauteil (24) zur Herstellung einer Knotenverbindung zwischen dem wenigstens ersten Profilbauteil (22) und wenigstens einem weiteren Profilbauteil dient und ein Schalenteil für die Knotenverbindung aufweist, in das ein oder mehrere weitere Profilbauteile eingelegt werden können und die Verbindung mithilfe weiterer Schalen vervollständigt werden kann, wobei das Verbindungsbauteil (24) bei der Herstellung der Strukturbauteilgruppe (20) in einem Infusionsverfahren unter Vakuum direkt mit dem Profilbauteil (22) verbunden ist und sich ein erstes textiles Halbzeug (26) des Profilbauteils (22) sowie ein zweites textiles Halbzeug (28) des Verbindungsbauteils (24) berühren und überlappen, wobei die textilen Halbzeuge (26, 28) Faserpreforms sind.

## Claims

1. Method for producing a structural subassembly (20), in particular for a motor vehicle, comprising at least a first profile component (22) of fibre-reinforced plastic and at least one connecting component (24) for producing a node connection of the first profile component to a further profile component, **characterized by** the following steps:
a) providing a mould (10) comprising at least one mould half (12), which has a cavity (14) which corresponds substantially to the first profile component (22) to be produced comprising at least one integrally moulded-on connecting component (24), wherein the connecting component (24) has a shell part for the node connection into which one or more further profile components can be placed and the connection can be completed with the aid of further shells;
b) introducing a one- or multi-piece textile reinforcing material of a textile semifinished product into the mould (10), wherein the textile reinforcing material comprises a first textile semifinished product (26) for the profile component (22) and at least a second textile semifinished product (28) for the connecting component (24), which touch and overlap in the mould (10), wherein the semifinished products are fibre preforms;
c) introducing a flowable plastics material (30) into the mould (10) in an infusion process under a vacuum, in order to impregnate the textile reinforcing material, and
d) curing and/or cooling the plastics material (30).

2. Method according to Claim 1, **characterized in that** the textile semifinished products (26, 28) are connected to one another by the plastics material (30) .

3. Method according to Claim 1 or 2, **characterized in that** the cavity (14) has a defined sprue system.

4. Method according to one of the preceding claims, **characterized in that** the mould (10) has two mould halves, which in the closed state form the cavity (14) .

5. Structural subassembly, in particular for a motor vehicle, comprising at least a first profile component (22) of fibre-reinforced plastic and at least one connecting component (24), which is produced in one piece with the first profile component (22) from fibre-reinforced plastic, wherein the connecting component (24) serves for producing a node connection between the at least first profile component (22) and at least one further component and has a shell part for the node connection, into which one or more further profile components can be placed and the connection can be completed with the aid of further shells, wherein in the production of the structural subassembly (20) the connecting component (24) is directly connected to the profile component (22) in an infusion process under a vacuum and a first textile semifinished product (26) of the profile component (22) and a second textile semifinished product (28) of the connecting component (24) touch and overlap, wherein the textile semifinished products (26, 28) are fibre preforms.

## Revendications

1. Procédé de fabrication d'un groupe de composants structuraux (20), en particulier pour un véhicule automobile, comprenant au moins un premier composant profilé (22) en plastique renforcé par des fibres et au moins un composant de liaison (24) pour établir une liaison nodale du premier composant profilé à un composant profilé supplémentaire, **caractérisé par** les étapes suivantes :
a) fourniture d'un moule (10) comprenant au moins une moitié de moule (12) qui présente une cavité (14) qui correspond essentiellement au premier composant profilé à fabriquer (22) avec au moins un composant de liaison (24) façonné d'une seule pièce, le composant de liaison (24) présentant une partie de coque pour la liaison nodale, dans laquelle peuvent être insérés un ou plusieurs composants profilés supplémentaires et la liaison pouvant être achevée à l'aide de coques supplémentaires ;
b) introduction dans le moule (10) d'un matériau de renforcement textile d'une seule pièce ou en plusieurs parties d'un produit semi-fini textile, le matériau de renforcement textile présentant un premier produit semi-fini textile (26) pour le composant profilé (22) ainsi qu'au moins un deuxième produit semi-fini textile (28) pour le composant de liaison (24), lesquels viennent en contact et se chevauchent dans le moule (10), les produits semi-finis étant des préformes fibreuses ;
c) introduction d'une matière plastique fluide (30) dans un procédé d'infusion sous vide dans le moule (10) afin d'imprégner le matériau de renforcement textile ; et
d) durcissement et/ou refroidissement de la matière plastique (30).

2. Procédé selon la revendication 1, **caractérisé en ce que** les produits semi-finis textiles (26, 28) sont reliés l'un à l'autre par la matière plastique (30).

3. Procédé selon la revendication 1 ou 2, **caractérisé en ce que** la cavité (14) présente un système de carottage défini.

4. Procédé selon l'une quelconque des revendications précédentes, **caractérisé en ce que** le moule (10) présente deux moitiés de moules qui forment la cavité (14) dans l'état fermé.

5. Groupe de composants structuraux, en particulier pour un véhicule automobile, comprenant au moins un premier composant profilé (22) en plastique renforcé par des fibres et au moins un composant de liaison (24) qui est fabriqué d'une seule pièce avec le premier composant profilé (22) en plastique renforcé par des fibres,
le composant de liaison (24) servant à établir une liaison nodale entre l'au moins un premier composant profilé (22) et au moins un composant profilé supplémentaire et présentant une partie de coque pour la liaison nodale, dans laquelle peuvent être introduits un ou plusieurs composants profilés, et la liaison pouvant être achevée à l'aide de coques supplémentaires, le composant de liaison (24), lors de la fabrication du groupe de composants structuraux (20), étant relié directement au composant profilé (22) dans un procédé d'infusion sous vide et un premier produit semi-fini textile (26) du composant profilé (22) ainsi qu'un deuxième produit semi-fini textile (28) du composant de liaison (24) venant en contact et se chevauchant, les produits semi-finis textiles (26, 28) étant des préformes fibreuses.
